# EUROPEAN PATENT APPLICATION

(11) **EP 4 578 769 A1**
(43) Date of publication of application: **02.07.2025**
(21) Application number: 24215439.1
(22) Date of filing: 26.11.2024
(51) Int. Cl.: B62J 17/04

(54) **A SADDLE-TYPE VEHICLE**

(30) Priority: 26.12.2023 IN 202341088865
(71) Applicant: TVS Motor Company Limited, 600006 Chennai (IN)
(72) Inventor: Sulaiman, Thariq Ahmad, 600006 Chennai (IN); Garg, Manish, 600006 Chennai (IN); Singh, Parth, 600006 Chennai (IN); Dighe, Nachiket Atul, 600006 Chennai (IN); Santoshbhagawat, Gavhane, 600006 Chennai (IN)
(74) Representative: Patentanwaltskanzlei Matschnig & Forsthuber OG

(57) **Abstract**

The present invention relates to a saddle-type vehicle (100). The saddle-type vehicle (100) comprising a handlebar, a front cover panel (102) being supportably mounted on the handlebar and a windshield (110) being attached to the front cover panel (102). The windshield (110) is oriented at redetermined angular range (θ) with respect to a reference vertical axis (A-A'), based upon a height (H) of the windshield (110). The predetermined angular range (θ) of orientation of the windshield (110) being configured to reduce the aerodynamic drag on the vehicle (100).

## Description

### FIELD OF THE INVENTION

The present invention relates to a saddle-type vehicle and more particularly, to a saddle-type vehicle having a windshield assembly.

### BACKGROUND OF THE INVENTION

Reduction of an air resistance acting upon saddle-type vehicles is of an utmost consideration. Such air resistance, exerted during the movement of the saddle-type vehicle, tends to create a vehicle drag which results into reduced fuel efficiency and speed of the vehicle. Further, when the vehicle is running at a high speed, the air resistance negatively affects the stability of the vehicle. Also, the air directly impacts a rider of the vehicle which is unpleasant and further affects the vehicle handling capacity of the rider.

In existing configuration, two-wheeled vehicles are provided with windshields to reduce the air resistance acting on the vehicle and the rider. The windshield also protects the rider of the vehicle against the flying bugs or insects. Among saddle-type vehicles, generally cruiser-type vehicles are provided with relatively larger windshields to protect riders from direct impact of cold or hot air depending upon the extreme weather conditions.

It has been observed that these windshields of existing vehicles are designed and/or mounted based upon vehicle configuration and thus lack retrofit ability of the windshield in case a customer/rider of the vehicle wishes to customise or attach/mount a windshield basis his/her requirements. Additionally, owing to the existing configuration of the vehicles, the windshields do not effectively reduce the vehicle's aerodynamic drag due to affixed orientation of the windshield. As a result, the aerodynamic performance of the vehicle is reduced.

In view of the foregoing, it is desirable to overcome at least the above-mentioned disadvantages mentioned of the prior art.

### SUMMARY OF THE INVENTION

Accordingly, the present invention in one aspect provides a saddle-type vehicle. The saddle-type vehicle comprising a handlebar, a front cover panel and a windshield. The front cover panel is supportably mounted on the handlebar. The windshield is attached to the front cover panel and oriented at a predetermined angular range with respect to a reference vertical axis, based upon a height of the windshield. The predetermined angular range of orientation of the windshield being configured to reduce the aerodynamic drag on the vehicle.

In an embodiment of the invention, the reference vertical axis being an axis passing through a point of attachment formed between the windshield and the front cover panel in an upward-downward direction of the vehicle, the point of attachment being defined by a mounting bracket configured to attach the windshield to the front cover panel of the vehicle.

In another embodiment of the invention, the predetermined angular range of orientation of the windshield ranges between 25 to 75 degrees when the height of the windshield being equal to or greater than 30 centimeters.

In another embodiment of the invention, the predetermined angular range of orientation of the windshield ranges between -20 to 45 degrees when the height of the windshield being lesser than 30 centimeters.

In another embodiment of the invention, the orientation of windshield at the predetermined angular range being determined based upon at least one of the requirements of maintaining a posture of a rider in an upright position when driving the vehicle.

### BRIEF DESCRIPTION OF THE DRAWINGS

Reference will be made to embodiments of the invention, examples of which may be illustrated in accompanying figures. These figures are intended to be illustrative, not limiting. Although the invention is generally described in context of these embodiments, it should be understood that it is not intended to limit the scope of the invention to these particular embodiments.
Figure 1 shows a front-upper portion of a saddle-type vehicle having a windshield assembly in a first mounting configuration, in accordance with an embodiment of the invention.
Figure 2 shows a mounting configuration of the windshield of the saddle-type vehicle in a second mounting configuration, in accordance with an embodiment of the invention.

### DETAILED DESCRIPTION OF THE INVENTION

Various features and embodiments of the present invention here will be discernible from the following further description thereof, set out hereunder.

The present invention is directed towards a saddle-type vehicle in which the windshield is configured to be oriented at a predetermined angular range which enables the windshield to reduce the air resistance/ aerodynamic drag by deflecting the air flow path away from the rider.

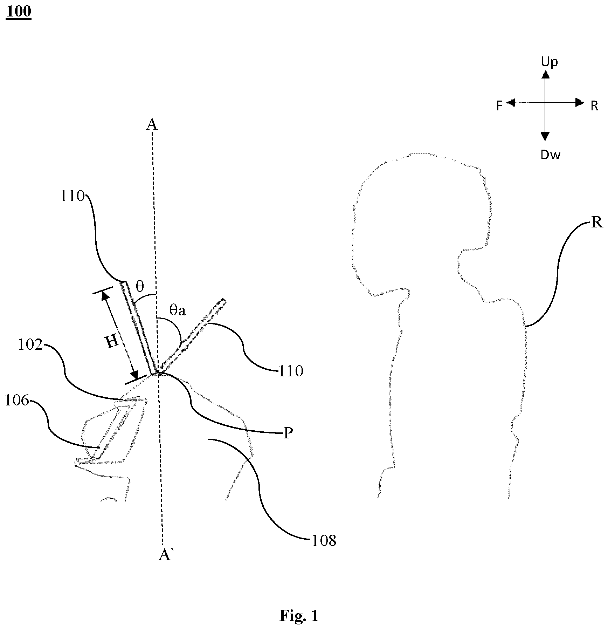

Figure 1 shows a front-upper portion of a saddle-type vehicle 100 having a windshield assembly, in accordance with an embodiment of the invention. Arrows provided in the top right corner of figures depicts direction with respect to the saddle-type vehicle 100, wherein an arrow Up denotes upward direction, an arrow Dw denotes downward direction, an arrow R denotes rearward direction, and an arrow F denotes frontwards direction of the saddle-type vehicle 100. A numeral (R) denotes a rider sitting on the saddle-type vehicle 100.

In a non-limiting example, the saddle-type vehicle 100 being a two-wheeled vehicle. The vehicle 100 includes a front wheel (not shown), a rear wheel (not shown), a frame assembly (not shown), and a prime mover (not shown) for driving the rear wheel. The prime mover includes, but is not limited to, an internal combustion engine or a driving motor (not shown) being powered by a battery. The frame assembly includes a head pipe, a main tube and seat rails (not shown). A handlebar (not shown) is supportably mounted on the headpipe. The vehicle includes a front cover panel 102 and a rear cover panel 108. Each of the front cover panel 102 and the rear cover panel 108 is mounted on a front side and a rear side of the handlebar, respectively. The front cover panel 102 is configured to cover a front portion of the handlebar and includes an opening (not shown) for receiving a headlight 106. A windshield assembly is configured to be attached to the front cover panel depending upon the vehicle configuration.

In a non-limiting example, the front cover panel 102 is supportably attached to the frame assembly of the vehicle through some support members. The vehicle 100 may include side fairing members configured to supportably mount the front cover panel 102.

In a non-limiting example, the windshield assembly includes a windshield 110 having a predetermined height (H), a mounting bracket (not shown) and plurality of attachment means (not shown) for fastening the windshield on the vehicle 100.The attachment means includes, but are not limited to, a fastener, adhesive etc. The predetermined height (H) of the windshield 110 is dependent upon the design, size and/or mounting requirements of the vehicle. For instance, if a vehicle is a scooter-type vehicle, a windshield of a relatively lower height will be required in comparison to motorcycle type vehicle of a normal configuration. Whereas, if the motorcycle is a cruiser type vehicle, a windshield of a relatively larger height will be required.

In an embodiment of the present invention, the windshield 110 is mounted on the front cover panel 102 using a bracket (not shown). The mounting bracket (not shown) includes but not limited to a single plate-like structure configured to be attached to the front cover panel 102 of the vehicle 100. The mounting bracket is configured to be attached to a portion of the front cover panel 102 and preferably, to a middle portion of the front cover panel 102.

In a non-limiting example, the mounting bracket includes vertical support members extending in an upward direction of the vehicle 100. The vertical support members being adapted to be attached to the windshield 110 for providing a support thereof.

In an embodiment, the windshield 110 attached to the front cover panel 102 is oriented at a predetermined angular range (Θ) with respect to a reference vertical axis (A-A') based upon the height (H) of the windshield 110. The predetermined angular range (Θ) of orientation of the windshield 110 being configured to reduce the aerodynamic drag on the vehicle (100) and decreases the air resistance by reflecting the air away from the rider of the vehicle 100.

As shown in Figure 1, the reference vertical axis (A-A') being an axis passing through a point of attachment (P) formed between the windshield 110 and the front cover panel 102 in an upward-downward direction of the vehicle 100.

In an embodiment, the point of attachment (P) being defined by a position of a portion of the mounting bracket disposed/attached to the front cover panel 102 for attaching the windshield 110 to the front cover panel 102. In a non-limiting example, the point of attachment (P) being a vertex defined by overlapping surfaces of the mounting bracket and a bottom end of the windshield 110.

In an embodiment, the predetermined angular range of orientation (Θ) of the windshield (110) ranges between 25 to 75 degrees when the height (H) of the windshield (110) being equal to or greater than 30 centimeters. Such configuration of predetermined height (H) and the predetermined angular range of orientation (Θ) of the windshield 110 optimizes the aerodynamic performance of the vehicle with an efficiency of 50 to 70 degrees percentage.

In a further embodiment, the predetermined angular range (Θ) of orientation of the windshield (110) ranges between -20 to 45 degrees when the height (H) of the windshield being lesser than 30 centimeters. Such configuration of predetermined height (H) and the predetermined angular range of orientation (Θ) of the windshield 110 optimizes the aerodynamic performance of the vehicle 100 with an efficiency of 50 to 70 degrees percentage. Referring to Figure 1, the negative angular range of orientation denotes that the windshield 110 is inclined forwardly of the reference vertical axis A-A' when seen in a vehicle sideview. The positive angular range of orientation denotes that the windshield 110 is inclined backwardly of the reference vertical axis A-A' when seen in a vehicle sideview.

In an embodiment, the orientation of windshield 110 at any predetermined angular range (Θ) is determined based upon at least one of the requirements of maintaining a posture of the rider (R) in an upright position when driving the vehicle 100. Such predetermined angular range (Θ) enables the windshield 100 to deflect the air away from the rider (R) of the vehicle 100.

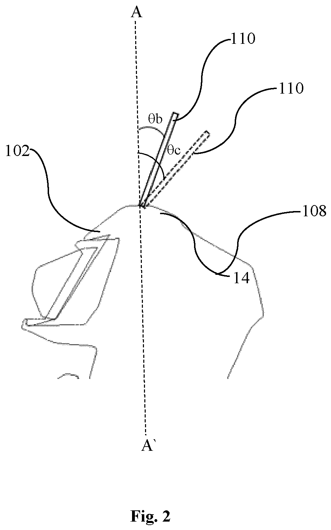

In a non-limiting example, the predetermined angular range (Θ) of orientation includes a first angular range (θa) (shown in Figure 1), a second angular range (θb) and a third angular range (θc) (shown in Figure 2). Depending upon the vehicle configuration, if the windshield 110 is required to be inclined at a position (shown by the dotted lines in Figure 1), the first angular range (θa) being an angle of inclination of the windshield 110' with respect to the reference vertical axis (A-A') which ranges between 0 to 45 degrees.

Figure 2 shows the windshield 110 of the saddle-type vehicle 100 in a second mounting configuration, in accordance with an embodiment of the invention. As shown, the second angular range (θb) being the angle of inclination of the windshield 110 with respect to the reference vertical axis (A-A') ranging between 0 to 25 degrees. The third angular range (θc) being the angle of inclination of the windshield 110 (shown by dotted lines) with respect to the reference vertical axis (A-A') ranging between 25 to 75 degrees.

Advantageously, the configuration of the vehicle of the present invention increases the aerodynamic performance of the vehicle and reduces the aerodynamic drag acting upon the vehicle. As a result, the fuel efficiency of the vehicle is increased which also allows the rider to achieve the top speed of the vehicle in a relatively less time. The reduction in aerodynamic drag increases the vehicle handling capacity of a rider.

Further, the present invention provides a mounting configuration for a windshield which increases the retrofit ability of the windshield. The mounting configuration enables a rider to mount the windshield based upon the height of the windshield.

While the present invention has been described with respect to certain embodiments, it will be apparent to those skilled in the art that various changes and modification may be made without departing from the scope of the invention as defined in the following claims.

### List of Reference Numerals

100 - Vehicle
102 - Front cover panel
106 - Headlight
108 - Rear cover panel
110- Windshield
A-A - reference vertical axis
H- Height of the windshield
P- Point of attachment formed between the windshield and the front cover panel
R- Rider
θ - Predetermined angular range
θa - First angular range
θb - Second angular range
θc - Third angular range

## Claims

1. A saddle-type vehicle (100) comprising:
a handlebar;
a front cover panel (102) being supportably mounted on the handlebar; and
a windshield (110) being attached to the front cover panel (102) and oriented at a predetermined angular range (Θ) with respect to a reference vertical axis (A-A'), based upon a height (H) of the windshield (110), the predetermined angular range (Θ) of orientation of the windshield (110) being configured to reduce the aerodynamic drag on the vehicle (100).

2. The vehicle (100) as claimed in claim 1, wherein the reference vertical axis (A-A') being an axis passing through a point of attachment (P) formed between the windshield (110) and the front cover panel (102) in an upward-downward direction of the vehicle (100), the point of attachment (P) being defined by a mounting bracket configured to attach the windshield (110) to the front cover panel (102).

3. The vehicle (100) as claimed in claim 1, wherein the predetermined angular range of orientation (Θ) of the windshield (110) ranges between 25 to 75 degrees when the height (H) of the windshield (110) being equal to or greater than 30 centimeters.

4. The vehicle (100) as claimed in claim 1, wherein the predetermined angular range (Θ) of orientation of the windshield (110) ranges between -20 to 45 degrees when the height (H) of the windshield being lesser than 30 centimeters.

5. The vehicle (100) as claimed in claim 1, wherein the orientation of windshield at the predetermined angular range (Θ) being determined based upon at least one of the requirements of maintaining a posture of a rider in an upright position when driving the vehicle (100).
